# EUROPÄISCHE PATENTANMELDUNG

(11) **EP 1 803 899 A1**
(43) Veröffentlichungstag der Anmeldung: **04.07.2007**
(21) Anmeldenummer: 06000026.2
(22) Anmeldetag: 02.01.2006
(51) Int. Cl.: F01D 5/30

(54) **Schlussbaugruppe für einen Schaufelkranz einer Strömungsmaschine**

(71) Anmelder: SIEMENS AKTIENGESELLSCHAFT, 80333 München (DE)
(72) Erfinder: Krützfeldt, Joachim, 45481 Mülheim an der Ruhr (DE); Kunze, Markus, 46569 Hünxe (DE); Martin, Silvio-Ulrich, 46049 Oberhausen (DE); Mutke, Stefan, 91207 Lauf (DE)

(57) **Zusammenfassung**

Die Erfindung betrifft eine Schlussbaugruppe (33) zum Schließen des verbleibenden Zwischenraums (28) zwischen der ersten und der letzen in einer Umfangsnut (10) einer Strömungsmaschine eingesetzten Schaufel (12a, 12b) eines Schaufelkranzes, mit mindestens zwei Teilen (30, 32), die jeweils mit eine Hinterschneidung (24, 26) bildenden Vorsprüngen (20, 22) der Umfangsnut (10) verhakbar sind, und mit einem Sicherungselement (36), welches die Teile (30, 32) gegen Herauslösen aus der Umfangsnut (10) sichert. Um eine Schlussbaugruppe (33) zum Schließen des verbleibenden Zwischenraums (28) anzugeben, welche einfach und kostengünstig lösbar ist und welche die hohen mechanischen Beanspruchungen zuverlässig erträgt, wird vorgeschlagen, dass das Sicherungselement (36) zwischen den beiden Teilen (30, 32) um seine Längsachse (38) drehbar angeordnet ist und einen Schlüsselkopf (40) und einen Schlüsselbart (44) aufweist. Der Schlüsselbart (44) des Sicherungselements (32) ist durch Drehen derartig positionierbar, dass zum Einbau der Teile (30, 32) in die Umfangsnut (10) diese zueinander bewegbar sind und dass zur Sicherung der Teile (30, 32) und gegen Herauslösen aus der Umfangsnut (10) der Schlüsselbart (44) des Sicherungselements (36) an mindestens eine Seitenfläche (56) eines der Teile (30, 32) anlegbar ist.

## Beschreibung

Die Erfindung betrifft eine Schlussbaugruppe zum Schließen des verbleibenden Zwischenraums zwischen der ersten und der letzten in einer Umfangsnut einer Strömungsmaschine eingesetzten Schaufel eines Schaufelkranzes, mit mindestens zwei Teilen, die jeweils mit jeweils eine Hinterschneidung bildenden Vorsprüngen der Umfangsnut verhakbar sind, und mit einem Sicherungselement, welches die Teile gegen Herauslösen aus der Umfangsnut sichert.

Schlussbaugruppen derartiger Gattung gehen beispielsweise aus der EP 1 457 642 A2 und US 2002/0127105 A1 hervor. Beide Schlussbaugruppen bestehen im Wesentlichen aus zwei Seitenteilen, die in den verbleibenden Zwischenraum zwischen der ersten und der letzten Schaufel eines Schaufelkranzes eingesetzt werden. Da jedes Seitenteil sich jeweils mit einem die Hinterschneidung bildenden Vorsprung der Umfangsnut verhakt und damit beide Seitenteile in den Zwischenraum einbringbar sind, sind beide Seitenteile gemeinsam - in Axialrichtung betrachtet - schmaler als der aufzufüllende und zu verschließende Zwischenraum. Nach der Montage der beiden Seitenteile verbleibt wiederum ein Raum zwischen diesen frei, der mit einem Zwischenteil aufgefüllt werden muss. Das Zwischenteil sichert die beiden Seitenteile gegen eine die jeweilige Verhakung lösende axiale Verschiebung und somit gegen ein Herauslösen aus der Umfangsnut. Um das Zwischenteil selbst gegen Herauslösen zu sichern, ist dieses mit jeweils zwei lippenartigen Stegen ausgestattet, welche jeweils durch plastisches Verformen in eine an jedem Seitenteil vorgesehene Tasche eingebogen werden. Dadurch ist das Zwischenteil mit jedem Seitenteil formschlüssig verhakt, wodurch ebenfalls die beiden Seitenteile in der Umfangsnut gehalten werden. Die US 2002/0127105A1 schlägt außerdem vor, dass das Zwischenteil über einen Schwalbenschwanz mit der ersten und der letzten Schaufel des Schaufelkranzes verhakt ist, wohingegen gemäß der EP 1 457 642 A1 jedes Seitenteil der Schlussbaugruppe mit der ersten und der letzten Schaufel des Schaufelkranzes verhakt ist. Dadurch wird eine Spaltbildung und -vergrößerung zwischen benachbarten Laufschaufeln und der Schlussbaugruppe in Umfangsrichtung im Wesentlichen verhindert.

Nachteilig bei den bekannten Schlussbaugruppen ist jedoch, dass zum Entfernen der Schlussbaugruppe diese zumindest teilweise im Bereich des Formschlusses aufwändig zerstört werden muss. Außerdem ist zu beachten, dass die Schlussbaugruppe den auftretenden thermischen und mechanischen Belastungen, insbesondere der beim Betrieb auftretenden Fliehkraft, sofern sie im Rotor einer Strömungsmaschine montiert ist, standhalten muss.

Dementsprechend ist es die Aufgabe der Erfindung die Schaffung einer Schlussbaugruppe zum Schließen des verbleibenden Zwischenraums zwischen der ersten und der letzten in einer Umfangsnut einer Strömungsmaschine eingesetzten Schaufel eines Schaufelkranzes, welche einfach und kostengünstig lösbar ist und dennoch die hohen mechanischen Beanspruchungen zuverlässig und langlebig erträgt.

Zur Lösung dieser Aufgabe wird gemäß der Erfindung eine Schlussbaugruppe angegeben, bei der das Sicherungselement zwischen den beiden Teilen um seine Längsachse drehbar angeordnet ist und einen Schlüsselkopf und einen Schlüsselbart aufweist, welcher Schlüsselbart durch Drehen derartig positionierbar ist, dass zur Montage die Teile durch zueinander Bewegen zwischen den gegenüberliegenden Vorsprüngen der Umfangsnut hindurch in die Umfangsnut gleichzeitig einsetzbar und anschließend auseinander spreizbar sind, und dass zur Sicherung der Teile gegen zueinander Bewegen in ihrer Einbaulage der Schlüsselbart an mindestens eine Seitenfläche eines der gespreizten Teile anlegbar ist.

Die Erfindung geht von der Erkenntnis aus, dass die beiden Teile, welche auch als vorderes Teil und als hinteres Teil - bezogen auf die Axialrichtung eines die Umfangsnut aufweisenden Rotors - bezeichnet werden, nicht nacheinander sondern gleichzeitig in die Umfangsnut hineinbewegt werden können, sofern beide Teile mit ihren zur Umfangsnut zugewandten Bereichen zueinander bewegbar sind, so dass sie zwischen der engsten Stelle der Umfangsnut, in Axialrichtung betrachtet, durchpassen. Beide Teile sind im Wesentlichen C-förmig mit jeweils zwei Armen und einem die beiden Arme verbindenden Steg ausgebildet, wobei der äußere der beiden Arme jedes C-förmigen Teils in seiner Einbaulage die Umfangsnut flächig mit der zur Umfangsnut angrenzenden Außenfläche abschließt und der innere Arm jedes C-förmigen Teils mit einem die Hinterschneidung formenden Vorsprung der Umfangsnut verhakbar ist. Der zwischen dem inneren und dem äußeren Arm jedes Teils erstreckende Steg verläuft in Einbaulage in Radialrichtung. Jeder Steg weist eine zum gegenüberliegenden Teil zugewandte Seitenfläche auf, welche in Axialrichtung einen Schüsselraum begrenzen. Zwischen den beiden Teilen der Schlussbaugruppe ist ein Schlüssel angeordnet, dessen Schlüsselbart im Schlüsselraum in Axialrichtung sowohl Platz sparend als auch den axialen Schlüsselraum ausfüllend positioniert werden kann. Zum Einbau wird der Schlüssel so positioniert, dass die beiden Teile mit ihren in die Umfangsnut zuerst eingebrachten inneren Arme zueinander bewegbar, insbesondere verkippbar sind, so dass die Seitenflächen einen besonders schmalen axialen Schlüsselraum begrenzen. Der Schlüssel darf daher beim Einbau lediglich eine geringe axiale Breite benötigen, so dass die inneren Arme der zueinander verkippten Teile der Schlussbaugruppe in den zwischen den gegenüberliegenden Vorsprüngen der Umfangsnut vorhandenen Freiraum eingebracht werden können. Nachdem die äußeren Arme der Teile an äußeren Seitenwänden der Vorsprünge der Umfangsnut anliegen, wird durch das fortgesetzte Hineinbewegen der Schlussbaugruppe die inneren Arme der Teile nach jeweils vorne bzw. hinten geschwenkt, d.h. die Teile werden auseinander gespreizt, bis die inneren Arme mit den jeweiligen Vorsprüngen verhakt sind. In dieser Einbaulage begrenzen die Seitenflächen der gespreizten Teile einen Schlüsselraum, dessen axiale Breite, verglichen mit dem während des Einbauvorgangs, wesentlich breiter ist. Im Querschnitt betrachtet vergrößert sich der von den Seitenflächen begrenzte Schlüsselraum trapezförmig zum Nutgrund, nach innen hin. Um diesen Bauraum - entlang des Umfangs betrachtet - an zumindest einer Stelle in Axialrichtung aufzufüllen, wird der Schlüssel gedreht, so dass dessen Bart an mindestens einer Seitenfläche eines der beiden Teile anliegt. Der an der Seitenfläche anliegende Schlüsselbart des Schlüssels verhindert dann das Bewegen bzw. das Schwenken der beiden Teile zueinander, so dass die Schlussbaugruppe gegen Herauslösen aus der Umfangsnut gesichert ist. Zum Ausbau der Schlussbaugruppe werden die Arbeitsschritte in umgekehrter Reihenfolge durchgeführt. Die Erfindung zeichnet sich somit durch besonders wenige Bauteile aus. Sie ermöglicht aufgrund des relativ großen verbleibenden leeren Schlüsselraums im Innern der Umfangsnut auch eine besonders leichte Bauweise der Schlussbaugruppe, was bei einer Verwendung in einem Rotor aufgrund der geringeren Fliehkraftbelastung besonders vorteilhaft ist. Zudem ist die Fertigung der Teile besonders einfach und kostengünstig. Zusätzlich kann eine vergleichsweise schnelle Montage und/oder Demontage der Schlussbaugruppe erfolgen, da alle Elemente der Schlussbaugruppe gleichzeitig in die Umfangsnut eingesetzt werden. Außerdem ist ein zerstörendes Lösen der Schlussbaugruppe aufgrund des drehbaren Schlüssels unnötig.

Ein wesentliches Merkmal der Erfindung ist, dass das als Schlüssel ausgebildete Sicherungselement zwischen den beiden Teilen um seine Längsachse drehbar angeordnet ist und einen Schlüsselkopf und einen Schlüsselbart aufweist. Der Schlüsselbart ist zwischen zwei Positionen verstellbar. In einer ersten Position nimmt der Schlüsselbart einen besonders schmalen axialen Bauraum ein, so dass die beiden Teile nutseitig zueinander bewegbar sind. In einer zweiten Position füllt der Schlüsselbart - in Umfangsrichtung gesehen - an zumindest einer Stelle des Schlüsselraums diesen zwischen den beiden auseinander gespreizten Teilen aus, was das Bewegen der beiden Teile zueinander verhindert. Dadurch ist es möglich, dass jeder innere Arm der beiden Teile, der zum Verhaken mit einem die Hinterschneidung bildenden Vorsprung nötig ist, geneigt in die Umfangsnut einbringbar ist, und erst, wenn dieser im Bereich der Hinterschneidung angeordnet ist, durch Einschwenken den jeweiligen Vorsprung der Umfangsnut hintergreift. Bisher wurde beim Stand der Technik jedes Teil durch zwei nacheinander ablaufende Montageschritte montiert, indem zuerst das vordere (oder hintere) Teil radial in die Umfangsnut eingebracht und in axialer Richtung zum vorderen Ende (oder zum hinteren Ende) der Umfangsnut verschoben wurde und anschließend das zweite Teil. Mit der Erfindung wird nun eine Schlussbaugruppe angegeben, bei der mit der Montage der Schlussbaugruppe die Verhakung jedes Seitenteils mit dem die Hinterschneidungen bildende Vorsprünge durch Einschwenken bzw. eine abschließende Drehbewegung ermöglicht. Dadurch ist eine besonders einfach zu montierende Schlussbaugruppe angegeben, die zudem besonders einfach zerstörungslos wieder gelöst und demontiert werden kann.

Im Rahmen von Weiterbildungen der Erfindung werden vorteilhafte Ausgestaltungen in den Unteransprüchen angegeben.

Besonders vorteilhaft werden die Teile gegen Bewegen und gegen Herauslösen aus der Umfangsnut gesichert, wenn der Schlüsselbart als Doppelbart mit zwei Barthälften ausgebildet ist, und jede Barthälfte jeweils an die eine Seitenfläche jedes Teils anlegbar ist. Da jede Barthälfte an die eine Seitenfläche jedes Teils anlegbar ist, wird der zwischen den beiden Seitenflächen eingeschlossene Schlüsselraum der auseinander gekippten Teile an dieser Stelle im Querschnitt in axialer Richtung gesehen, lückenlos aufgefüllt, so dass auch ein Abknicken des Schlüssels aus der Radialrichtung heraus sicher vermieden ist. Somit kann eine besonders zuverlässige Sicherung der Teile gegen Bewegen und gegen Herauslösen aus der Umfangsnut angegeben werden.

Wenn die Seitenfläche des Teils einen Schlitz zur Aufnahme des Schlüsselbarts aufweist, in welchem der Schlüsselbart teilweise eingreifen kann, wird der Schlüssel durch den Schlitz drehgesichert, so dass auch beim Betrieb der Strömungsmaschine auftretende Vibrationen oder andere Einflüsse ein ungeplantes Verdrehen des Schlüssels nicht herbeiführen können. Demnach verhindert der in den Schlitz eingreifende Schlüsselbart auch das Bewegen der Teile zueinander und dementsprechend auch das Herauslösen der Teile aus der Umfangsnut besonders zuverlässig.

In einer Weiterbildung des Schlüssels weist dieser am Schlüsselkopf eine Aufnahme für ein Verdrehwerkzeug auf, mittels dem der Schlüssel besonders einfach von seiner Montagelage in die Sicherungslage bzw. Betriebslage und zurück verdreht werden kann. Beispielsweise weist der Schlüsselkopf eine Aufnahme auf, die als Sechskant, als Vierkant oder als Stern für einen korrespondierenden Schraubendreher ausgebildet sein kann.

Besonders vorteilhaft stellt sich die Ausgestaltung dar, bei der jedes Teil an eine Seitenwand anlegbar ist, die von einem die Hinterschneidung bildenden Vorsprung der Umfangsnut gebildet ist. Dadurch wird verhindert, dass die gesamte Schlussbaugruppe als Einheit sich innerhalb der Umfangsnut verdrehen kann, wenn der Zwischenraum zwischen der ersten und der letzten Schaufel des Schaufelkranzes sich aus unvorhersehbaren Gründen in Umfangsrichtung vergrößert. Selbst für diesen Fall wird mit der vorgeschlagenen Weiterbildung eine besonders zuverlässige und gegen Herauslösen aus der Umfangsnut gesicherte Schlussbaugruppe angegeben.

Um den Schlüsselbart besonders zuverlässig an die Seitenfläche jedes Teils unter einer Vorspannung anzulegen, weist der Schlüsselkopf ein Außengewinde zum Aufschrauben einer Gewindemutter auf, welche Gewindemutter sich an beiden Teilen abstützt und das Sicherungselement mit den beiden Teilen verspannt. Da der Schlüsselraum der auseinander geklappten Teile nach Art eines Trapezes sich zum Nutgrund hin erweitert, ist der Schlüsselbart, im Querschnitt gesehen, korrespondierend konisch ausgebildet. Dieser keilartige Schlüsselbart wird aufgrund der Gewindemutter, welche sich an den beiden Teilen außen abstützt, in den sich nach außen verjüngenden Schlüsselraum gezogen, was die beiden Teile besonders fest mit den Vorsprüngen und auch mit dem Schlüssel verspannt. Es kann somit eine Schlussbaugruppe angegeben werden, bei der ein ungewollt selbsttätiges Verdrehen des Schlüssels besonders zuverlässig verhindert wird.

Um aerodynamische Verluste im Bereich der Schlussbaugruppe zu vermeiden, sind der Schlüsselkopf und/oder die Gewindemutter in beide Teile versenkbar. Wenn darüber hinaus das Sicherungselement oder die Gewindemutter gegen Lösen, beispielsweise durch eine vergleichsweise kleine Anstemmung gesichert ist, ist das ungeplante Herauslösen der Teile der Schlussbaugruppe aus der Umfangsnut unmöglich.

Die Schlussbaugruppe kann insbesondere in einer Strömungsmaschine, beispielsweise in einer Turbine, in einer Gasturbine, in einem Verdichter oder innerhalb einer Dampfturbine eingesetzt werden, die jeweils einen Rotor mit mindestens einer Hinterschneidung aufweisenden Umfangsnut und mit darin eingesetzten Laufschaufeln aufweist, wobei der verbleibende Zwischenraum zwischen der ersten und der letzten in der Umfangsnut eingesetzten Laufschaufel mit der erfindungsgemäßen Schlussbaugruppe verschlossen ist. Die Strömungsmaschine als auch der Rotor weisen eine besonders lange Lebensdauer auf und für den Fall, dass die Laufschaufeln des Kranzes ausgetauscht werden müssen, kann die Schlussbaugruppe besonders einfach, schnell und kostengünstig demontiert und wieder verwendet werden.

Die weitere Erläuterung der Erfindung erfolgt anhand der in der Zeichnung dargestellten Ausführungsbeispiele.

Im Einzelnen zeigen:
- FIG 1: die Draufsicht auf eine mit Laufschaufeln bestückte Umfangsnut, bei der der verbleibende Zwischenraum zwischen der ersten und der letzten Laufschaufel mit einer zwei Teile und ein Sicherungselement umfassenden Schlussbaugruppe verschlossen ist,
- FIG 2: in Querschnittsansicht die Umfangsnut mit der in verkippter Position angeordneten Schlussbaugruppe während des Einbaus in die Umfangsnut,
- FIG 3, 4: in Querschnittsansicht die erfindungsgemäße Schlussbaugruppe an unterschiedlichen Positionen innerhalb der Umfangsnut während des Einbaus und
- FIG 5: eine weitere Ausgestaltung der Schlussbaugruppe in einer Querschnittsansicht gemäß Schnittlinie VI
- FIG 6: die Schnittansicht V auf die Umfangsnut mit verschlossenem Zwischenraum in der weiteren Ausführungsvariante der Erfindung.

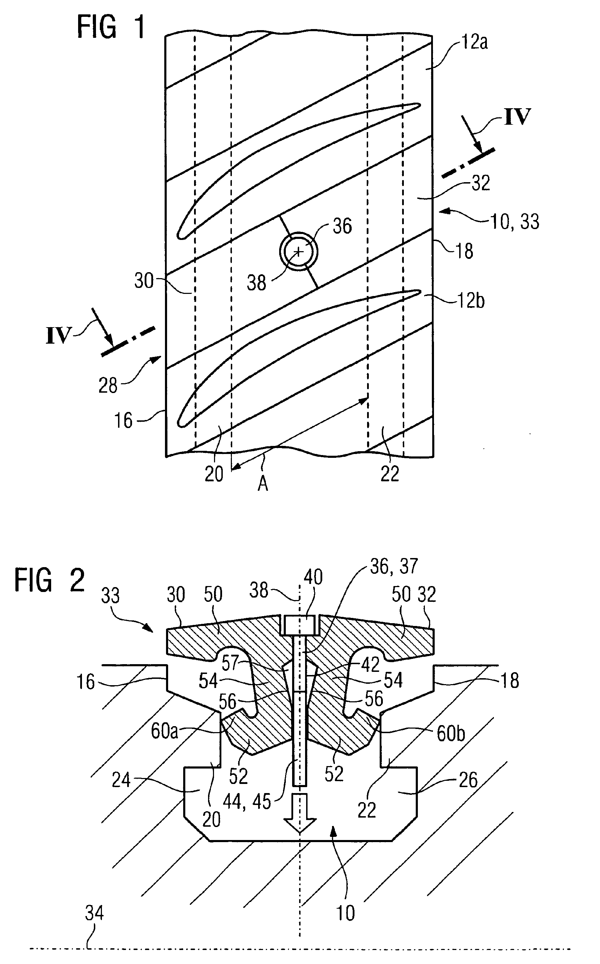

FIG 1 zeigt einen Ausschnitt einer Umfangsnut 10, in welcher Schaufeln 12 einer Strömungsmaschine eingesetzt sind. Die Umfangsnut 10 ist an der Außenfläche eines Rotors der Strömungsmaschine vorgesehen. Die Umfangsnut 10 könnte auch an einem Innengehäuse eines Verdichters einer Flugzeugturbine vorgesehen sein, an der Leitschaufel befestigt werden. Die Umfangsnut 10 weist in Axialrichtung des Rotors gesehen eine vordere Seitenwand 16 und eine hintere Seitenwand 18 auf, an denen jeweils in Umfangsrichtung verlaufende und sich in axialer Richtung erstreckende Vorsprünge 20 und 22 angeordnet sind, die jeweils eine vordere und eine hintere Hinterschneidung 24, 26 bilden (FIG 2).

In die Umfangsnut 10 werden Laufschaufeln 12a, 12b eingesetzt, welche zu den Hinterschneidungen 24, 26 korrespondierend ausgeführte, hammerförmige Schaufelfüße aufweisen. Dabei werden die Laufschaufeln 12a, 12b in die Umfangsnut 10 eingesetzt und anschließend so weit, beispielsweise um 45° oder 60° gedreht, bis die hammerförmigen Schaufelfüße die Vorsprünge 20, 22 hintergreifen.

Der zwischen der ersten Laufschaufel 12a und der letzten Laufschaufel 12b verbleibende Zwischenraum 28 der ansonsten vollständig mit Schaufeln 12 eines Schaufelkranzes und ggf. dazwischen angeordneten Zwischenelementen bestückten Umfangsnut 10 muss mittels einer besonderen Vorrichtung, die Schlussbaugruppe 33, Schaufelschloss oder auch Rotor-Schluss genannt wird, verschlossen werden.

Die Schlussbaugruppe 33 umfasst zwei Teile als vorderes Teil 30 und hinteres Teil 32, bezogen auf die Rotationsachse 34 eines Rotors der Strömungsmaschine, welche den Zwischenraum 28 verschließt. FIG 2 zeigt die Schlussbaugruppe 33 mit zwei zueinander bewegten Teilen 30, 32 während des Einbaus in den freien Zwischenraum 28 der Umfangsnut 10. Die Schlussbaugruppe 33 umfasst die beiden Teile 30, 32 und ferner ein Sicherungselement 36, welches schlüsselartig ausgebildet ist und zwischen den beiden Teilen 30, 32 um seine Längsachse 38 drehbar angeordnet ist. Das Sicherungselement 36 ist als Schlüssel 37 ausgebildet und weist aufeinander folgend einen Schlüsselkopf 40, einen Schlüsselschaft 42 und einen Schlüsselbart 44 auf. Der Schlüsselbart 44 ist plattenförmig ausgebildet, wobei die gegenüberliegenden Schmalflächen 45 des Schlüsselbarts 44 nach außen gesehen konisch zueinander verlaufen, so dass der Schlüsselbart 44, welcher als Doppelbart zwei Barthälften umfasst, insgesamt eine trapezartige Kontur aufweist.

Jedes der beiden Teile 30, 32 ist, wie FIG 2 zeigt, im Querschnitt im Wesentlichen C-förmig ausgebildet und weist jeweils einen äußeren Arm 50, einen inneren Arm 52 und einen die Arme 50, 52 verbindenden Steg 54 auf. In der gezeigten Ausgestaltung sind die inneren Arme 52 in Axialrichtung gesehen kürzer als die äußeren Arme 50. Jedes Teil 30, 32 weist eine am Steg 54 angeordnete und jeweils dem benachbarten Teil 32, 30 zugewandte Seitenfläche 56 auf. Zwischen den beiden Seitenflächen 56 ist der Schlüsselbart 44 des Schlüssels 37 angeordnet.

Während des Einbaus der Schlussbaugruppe 33 erstreckt sich der Schlüsselbart 44 in Umfangsrichtung der Umfangsnut 10, so dass die Schmalflächen 45 des Schlüsselbartes 44 frei liegen. Ein zwischen den beiden Seitenflächen 56 eingeschlossener Schlüsselraum 57 kann somit - in Axialrichtung betrachtet - aufgrund der nutseitig, d.h. im Bereich der inneren Arme 52 zueinander bewegten Teile 30, 32 besonders schmal sein (FIG 2). Der axiale Abstand zwischen einem vorderen, am inneren Arm 52 angeordneten Vorsprung 60a und einem hinteren, am inneren Arm 52 angeordneten Vorsprung 60b ist folglich kleiner als der axiale Abstand A zwischen den beiden Vorsprüngen 20, 22 der Umfangsnut 10, so dass der der Umfangsnut 10 zugewandte Bereich der Schlussbaugruppe 33 zwischen den beiden Vorsprüngen 20, 22 der Umfangsnut 10 hindurch passt. Die Schlussbaugruppe 33 kann in die Umfangsnut 10 eingesetzt werden.

Folglich werden zum Einbau der Schlussbaugruppe 33 die beiden Teile 30, 32 nutseitig zueinander geschwenkt, so dass das Einsetzen der Schlussbaugruppe 33 in die Umfangsnut 10 problemlos möglicht ist.

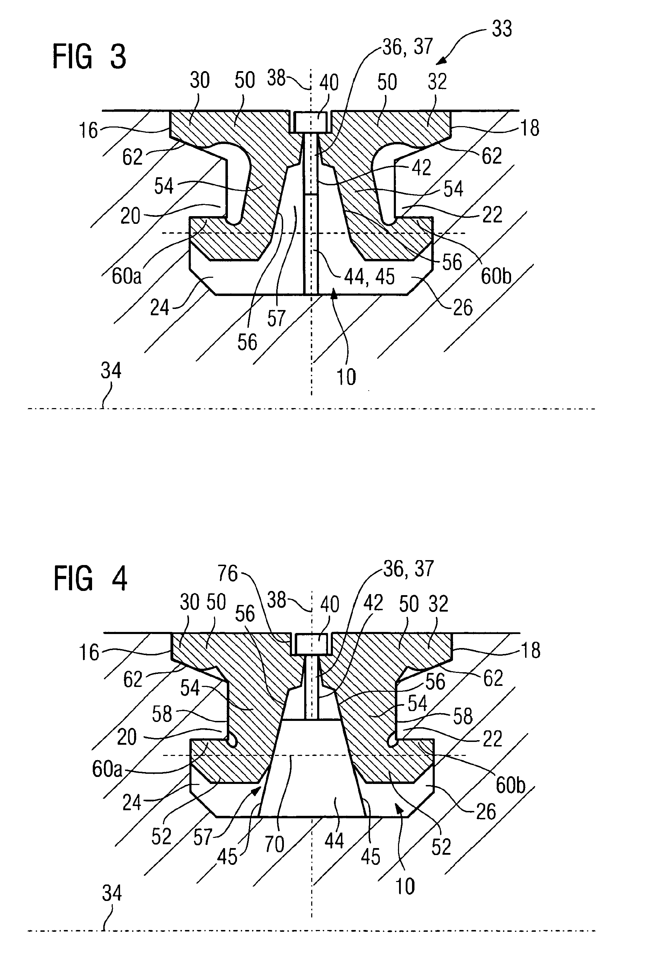

Während der Einsetzbewegung der Schlussbaugruppe 33 kommt es zum Anliegen der äußeren Arme 50 an den Außenflächen 62 der Vorsprünge 20 und 22, so dass durch die Fortsetzung der Einsetzbewegung beide Teile 30, 32 nutgrundseitig nach vorne und nach hinten gedreht, d.h. geschwenkt werden, wodurch die an den inneren Armen 52 angeordneten Vorsprünge 60 die an den Seitenwänden 16 und 18 der Umfangsnut 10 angeordneten Vorsprünge 20 und 22 hintergreifen. Diese in einem Zwischenschritt der Montage erreichte Position der Schlussbaugruppe 33 ist in FIG 3 dargestellt und kennzeichnet die Einbaulage der Teile 30, 32. Der von den Seitenflächen 56 begrenzte Schlüsselraum 57 ist nun vergleichsweise breit. Nach Erreichen der Einbaulage wird das Sicherungselement 36 der Schlussbaugruppe 33 um beispielsweise einen Winkel von 90° gedreht, so dass die Schmalflächen 45 des Schlüsselbarts 44 an den Seitenflächen 56 der Teile 30, 32 anliegen. Dies zeigt FIG 4. Die linke Barthälfte liegt an der Seitenfläche 56 des vorderen Teils 30 an und die rechte Barthälfte an der Seitenwand 56 des hinteren Teils 32. Dadurch ist der axiale Schlüsselraum 57 entlang der gestrichelten Linie 70 lückenlos aufgefüllt, so dass die Teile 30, 32 nicht mehr zueinander bewegt werden können. Dementsprechend ist die Schlussbaugruppe 33 gegen Herauslösen aus der Umfangsnut 10 gesichert. Aufgrund der flächigen Anlage des Schlüsselbarts 44, bei der jede Schmalfläche 57 an einer der Seitenfläche 56 anliegt, ist selbst bei einer Wechselbeanspruchung eine sichere Anlage des Schlüssels 37 gewährleistet.

Außerdem zeigt FIG 4, dass jedes Teil 30, 32 an einer Seitenwand 58 des Vorsprungs 20, 22 flächig anliegt. Sollte sich im unwahrscheinlichen Falle ein in Umfangsrichtung gerichtetes Spiel zwischen der Schlussbaugruppe 33 und einer der benachbarten Laufschaufeln 12a, 12b oder beiden ergeben, so ist die Schlussbaugruppe 33 als Ganzes gegen ein Verdrehen in der Umfangsnut 10 gesichert, da beide Teile 30, 32 an den Seitenwänden 58 ohne ein dafür ausreichendes Spiel fest anliegen.

Das Sicherungselement 36 weist eine am Schlüsselkopf 40 stirnseitig angeordnete Aufnahme für ein Verdrehwerkzeug, beispielsweise einen Innenvierkant auf, um es zwischen den gezeigten Positionen drehen zu können.

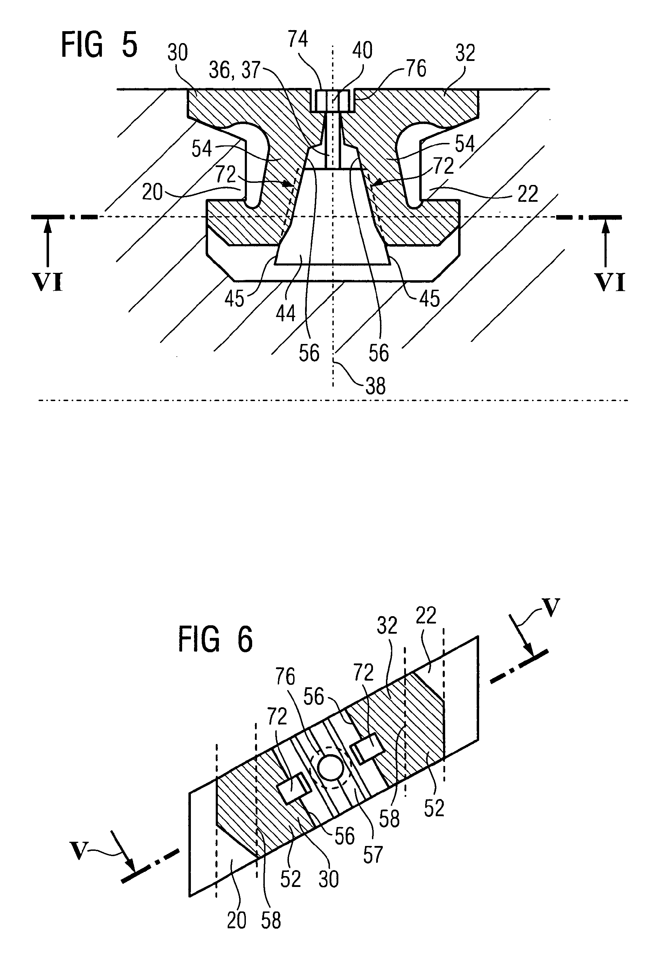

FIG 5 zeigt im Querschnitt gemäß der Schnittlinie V der FIG 6 eine Variante der erfindungsgemäßen Schlussbaugruppe 33 in montierter Lage. An den Seitenflächen 56 der Teile 30, 32 sind Schlitze 72 vorgesehen, welche gemäß des Schnittes VI in FIG 6 unter Ausblendung des Sicherungselementes dargestellt sind. In FIG 5 und FIG 6 sind die bereits aus den FIG 2 bis FIG 4 bekannten Elemente mit identischen Bezugszeichen beziffert. Sie weisen jeweils die identische Funktion auf, so dass hier auf die Beschreibung der schon bekannten Elemente und Wirkung verzichtet wird.

Neben der Aufnahme für das Verdrehwerkzeug weist das Sicherungselement 36 gemäß FIG 5 an seinem Schlüsselkopf 40 ein Außengewinde zum Aufschrauben einer ggf. auch selbstsichernden Gewindemutter 74 auf, mit welcher der Schlüsselbart 44 des Sicherungselements 36 in die beiden Schlitze 72 nach entsprechender Drehung der Gewindemutter 74 teilweise versenkt bzw. eingehoben werden kann. Dabei stützt sich die Gewindemutter 74 außen an den beiden Teilen 30, 32 ab und ist in einer äußeren Ausnehmung 76 aerodynamisch versenkt.

Damit das Sicherungselement 36 auch gegen ein ungewolltes Drehen gesichert ist, kann es darüber hinaus auch noch mit einem der beiden Teile 30, 32 geringfügig verstemmt werden. Eine wie aus dem Stand der Technik bekannte aufwändige Verstemmung zweier lippenartiger Stege ist nicht erforderlich.

Selbstverständlich ist auch eine Kombination der aus FIG 4 und FIG 5 bekannten Schlussbaugruppe denkbar, bei der die Teile 30, 32 gemäß FIG 4 mit einem Schlüssel und einer schlüsselkopfseitig angeschraubten Gewindemutter Schlussbaugruppe mit den beiden Teilen verspannbar ist.

Insgesamt wird mit der erfindungsgemäßen Schlussbaugruppe eine Vorrichtung zum Schließen des verbleibenden Zwischenraums zwischen der ersten und der letzten in einer Umfangsnut einer Strömungsmaschine eingesetzten Schaufel eines Schaufelkranzes angegeben, die lediglich aus zwei den Zwischenraum abdeckenden Teilen besteht. Damit die Teile in die Umfangsnut einführbar sind, sind die inneren Arme der beiden Teile zueinander schwenkbar, so dass diese zwischen den Vorsprüngen der Umfangsnut einschiebbar sind. Damit die beiden Teile in ihrer endgültigen Lage gegen Verkippen und gegen Herauslösen aus der Umfangsnut gesichert werden, ist zwischen diesen ein um seine Längsachse drehbar angeordnetes Sicherungselement vorgesehen, welches einen Schlüsselkopf und einen Schlüsselbart aufweist, wobei der Schlüsselbart an mindestens eine Seitenwand des einen Teils anlegbar ist.

## Patentansprüche

1. Schlussbaugruppe (33) zum Schließen des verbleibenden Zwischenraums (28) zwischen der ersten und der letzen in einer Umfangsnut (10) einer Strömungsmaschine eingesetzten Schaufel (12a, 12b) eines Schaufelkranzes,
mit mindestens zwei Teilen (30, 32), die jeweils mit eine Hinterschneidung (24, 26) bildenden Vorsprüngen (20, 22) der Umfangsnut (10) verhakbar sind, und
mit einem Sicherungselement (36), welches die Teile (30, 32) gegen Herauslösen aus der Umfangsnut (10) sichert,
**dadurch gekennzeichnet, dass**
das Sicherungselement (36) zwischen den beiden Teilen (30, 32) um seine Längsachse (38) drehbar angeordnet ist und einen Schlüsselkopf (40) und einen Schlüsselbart (44) aufweist, welcher Schlüsselbart (44) durch Drehen derartig positionierbar ist,
dass zur Montage die Teile (30, 32) durch zueinander Bewegen zwischen den gegenüberliegenden Vorsprüngen (20, 22) der Umfangsnut (10) hindurch in die Umfangsnut (10) gleichzeitig einsetzbar und anschließend auseinander spreizbar sind, und
dass zur Sicherung der Teile (30, 32) gegen zueinander Bewegen in ihrer Einbaulage der Schlüsselbart (44) an mindestens eine Seitenfläche (56) eines der gespreizten Teile (30, 32) anlegbar ist.

2. Schlussbaugruppe (33) nach Anspruch 1,
bei der der Schlüsselbart (44) als Doppelbart mit zwei Barthälften ausgebildet ist, und jede Barthälfte jeweils an die eine Seitenfläche (56) jedes Teils (30, 32) anlegbar ist.

3. Schlussbaugruppe (33) nach Anspruch 1 oder 2,
bei der die Seitenfläche (56) des Teils (30, 32) einen Schlitz (72)aufweist, in welcher der Schlüsselbart (44) teilweise eingreifen kann.

4. Schlussbaugruppe (33) nach Anspruch 1, 2 oder 3,
bei der der Schlüsselkopf (40) eine Aufnahme für ein Verdrehwerkzeug aufweist.

5. Schlussbaugruppe (33) nach einem der vorhergehenden Ansprüche,
bei der jedes Teil (30, 32) an eine Seitenwand (58) anlegbar ist, die von einem die Hinterschneidung (24, 26) bildenden Vorsprung (20, 22) der Umfangsnut (10) gebildet ist.

6. Schlussbaugruppe (33) nach einem der vorangehenden Ansprüche,
bei der der Schlüsselkopf (40) ein Außengewinde zum Aufschrauben einer Gewindemutter (74) aufweist, welche Gewindemutter (74) das Sicherungselement (36) an den beiden Teilen (30, 32) befestigt.

7. Schlussbaugruppe (33) nach Anspruch 6,
bei der der Schlüsselkopf (40) und/oder die Gewindemutter (74) in die Teile (30, 32) versenkbar ist.

8. Schlussbaugruppe (33) nach einem der vorangehenden Ansprüche,
bei der das Sicherungselement (36) oder die Gewindemutter (74) gegen Lösen gesichert ist.

9. Strömungsmaschine mit einem Rotor, der mindestens eine Hinterschneidungen (24, 26) aufweisende Umfangsnut (10) mit darin eingesetzten Laufschaufeln (12) aufweist,
wobei der verbleibende Zwischenraum (28) zwischen der ersten und der letzten in der Umfangsnut (10) eingesetzten Laufschaufel (12a, 12b) mit einer Schlussbaugruppe (33) nach einem der vorangehenden Ansprüche verschlossen ist.

10. Strömungsmaschine nach Anspruch 9,
ausgebildet als Turbine einer Gasturbine, als Verdichter oder als Dampfturbine.
